# EUROPEAN PATENT APPLICATION

(11) **EP 0 926 611 A2**
(43) Date of publication of application: **30.06.1999**
(21) Application number: 98124230.8
(22) Date of filing: 17.12.1998
(51) Int. Cl.: G06F 17/60

(54) **Method for validation of electronic transactions**

(30) Priority: 23.12.1997 US 997086
(71) Applicant: AT&T Corp., New York, NY 10013-2412 (US)
(72) Inventor: Furman, Daniel Selig, Summit, New Jersey 07901 (US); Karam, Gerald Michael, Chatham, New Jersey 07928 (US); Unger, David G., Mendham Township, New Jersey 07960 (US)
(74) Representative: Modiano, Guido, Dr.-Ing.

(57) **Abstract**

An electronic transaction is validated by a customer placing a telephone call via the telephone network. The call is routed to a validation system and the telephone call provides the validation system with a transaction identification which identifies a previous electronic transaction between the customer and a vendor. The validation system communicates with the vendor server via a data network to retrieve a price for the transaction. The validation system then sends the price to the customer via the telephone call and awaits an acceptance by the customer. Upon receipt of the customer acceptance, the validation system sends an authorization to the vender server via the data network indicating that the transaction has been validated. The validation system also sends the transaction price to a network billing node which results in an additional charge to the customer's telephone bill.

## Description

### Field of the Invention

The present invention relates generally to electronic commerce and more particularly to the validation of electronic transactions.

### Background of the Invention

The popularity of the Internet, and in particular the World Wide Web (WWW) is growing. In turn, electronic commerce over the Internet is also growing. In one type of electronic commerce, users are using the Internet to buy goods (e.g. books, clothing) which are later shipped to the buyer. In another type of electronic commerce, users are buying access to Internet sites which are only accessible to paid subscribers. For example, a particular Internet site may allow users to search a patent database for patents of interest to the user. The provider of such a service may require that the user pay a monthly, or per transaction fee, for access to the system.

The majority of electronic transaction charges are paid via a credit card. However, credit card transactions carry a substantial overhead. This makes it impossible to sell low value goods and services over the Internet in a cost effective manner. Thus, the sale of a book for $30 is a cost effective transaction for a merchant, whereas the sale of an electronic version of a single song or picture for $1.00 is not cost effective.

One solution to this problem is to accumulate small charges over time and bill the customer on a monthly basis. This is expensive and burdensome because it requires that the merchant establish and maintain a billing and collection process. Another solution is to charge a customer a flat monthly charge for all transactions. This is only possible where the customer is paying for access to an Internet site. It does not work where the merchant is selling actual products.

Another problem with credit card payments over the Internet is customer anonymity. Many users of the Internet may wish to buy goods and services over the Internet but would also like to remain anonymous to the merchant. The use of a credit card makes such anonymity impossible.

One known solution to the problems of Internet billing is to use the telephone system 900 type services to pay for electronic commerce transactions. Such a service is provided by Internet Billing Company, Ltd. (ibill) of Fort Lauderdale, Florida. In that service, an Internet site will require a password to access the site. In order to gain the required password, a customer calls a 900 telephone number and a recording provides the customer with the required password. The customer than returns to the Internet site and provides the password to gain access to the desired goods or services. The customer is billed through his her telephone bill. In this system, there is no direct communication between the 900 billing system and the vendor Internet site. Instead, the password(s) and required 900 number to call are prestored in the vendor Internet site and in the 900 billing system. This results in a somewhat inflexible approach to electronic transaction billing with some deficiencies. One deficiency in this approach is that it is susceptible to fraud. Since the password( s) are pre-stored in the vendor site, it is possible for a customer to provide valid password(s) to the vendor site without having first called the 900 telephone number to generate a charge. For example, the customer could have obtained the required password(s) from a prior customer of the vendor site who did call the 900 telephone number or it is possible that the security of the prestored list of passwords could somehow become compromised. Another deficiency of this system is that it does not allow for variable billing. Each 900 number is pre-setup for a particular billing value. These values cannot change on a per transaction basis.

Thus, there is a need for an improved electronic transaction validation method.

### Summary of the Invention

The present invention is an improved electronic transaction validation method in which a telephone call is the mechanism for validating an electronic transaction. In accordance with the invention a telephone call from a customer is received by a validation system via the telephone network and, in response to the receipt of the telephone call, the validation system sends a signal to a vendor server via a data network to validate a previous electronic transaction between the customer and vendor. Thus, the validation system communicates with the telephone via the telephone network and the vendor server via the data network in order to validate the transaction.

In accordance with one aspect of the invention, the telephone call is placed to a telephone number (e.g. 900 telephone number) which results in a charge in addition to the cost of the telephone call. This charge may be a fixed amount, or may be variable. If the amount is variable, the validation system receives the billing amount from the vendor server and provides the billing amount to a network billing node which will add the appropriate amount to the customer's telephone bill. In one embodiment, the validation system sends the amount to the customer via the telephone call and requests that the customer accept or decline the charge. Only if the customer accepts the charge does the validation system send the billing amount to the billing node and send a signal to the vendor server to validate the transaction. If the customer does not accept the charge, the validation system sends a no-billing indication to the billing node.

These and other advantages of the invention will be apparent to those of ordinary skill in the art by reference to the following detailed description and the accompanying drawings.

### Brief Description of the Drawings

Fig. 1 shows a communication system in which the principles of the present invention may be implemented.
Figs. 2A-2C is a flowchart which illustrates the steps performed in accordance with one embodiment of the invention.

### Detailed Description

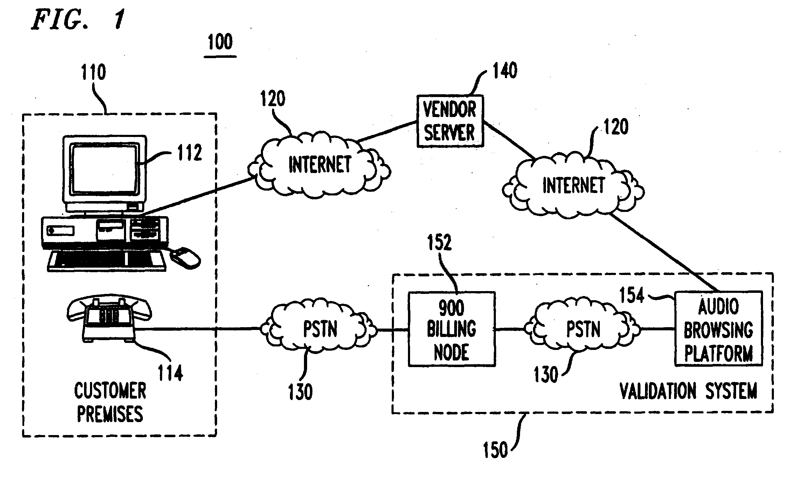

Fig. 1 shows a communication system 100 in which the principles of the present invention may be implemented. A customer premises 110 includes a computer 112 and a telephone 114. The computer 112 may be any type of computer such as a personal computer, workstation, mainframe, etc. In one embodiment, the computer 112 execute Internet communication software such as a WWW browser (e.g. Netscape Navigator or Microsoft Internet Explorer). Such Internet communication software is well known in the art. The telephone 114 is connected to the public switched telephone network (PSTN) 130 is a manner well known in the art.

The computer 112 is connected to the Internet 120. This Internet connection can take various forms. For example, the computer 112 could be connected to the Internet 120 via 1) a direct Internet connection: 2) a local area network: 3) a wide area network: or 4) a residential telephone line connected to a local exchange carrier (LEC) switch and an Internet service provider point of presence. Such various ways to connect a computer to the Internet 120 are well known and will not be discussed in detail herein because the principles of the present invention may be implemented utilizing any type of Internet connection.

The Internet 120 is used herein as an example of a well known data network which may be used in connection with the present invention. However, it is to be understood that the present invention is not limited to the Internet embodiment shown in Fig. 1. The principles of the present invention may be implemented utilizing any type of data network instead of, or in addition to, the Internet.

A vendor server 140 is connected to the Internet 120 and may be accessed by the customer computer 112. The vendor server 140 may advantageously operate in accordance with hypertext transfer protocol (HTTP) such that the vendor server 140 implements a WWW server such that customer computer 112 can communicate with the vendor server 140 via the Internet 120 using WWW browser software. The vendor server operates in accordance with computer program instructions in order to carry out the necessary functions. In one embodiment, the vendor server 140 implements an order system such that customers can access the vendor server 140 via the Internet 120 using WWW browsing software to order goods from the vendor operating the vendor server 140. The operation of a server (e.g. vendor server 140) to communicate with client computers (e.g. computer 112) via the Internet 120 is well known in the art.

The communication system 100 also includes a validation system 150. The validation system 150 communicates with the customer telephone 114 via the PSTN 130. The validation system 150 communicates with the vendor server 140 via the Internet 120. In one advantageous embodiment, the validation system 150 comprises a 900 billing node 152 and an audio browing platform 154 connected via the PSTN 130. The 900 billing node 152 is advantageously a 900 billing system which implements a variable amount billing service such as the AT&T Multi-Quest 900 Vari-A-Bill Service. Such variable billing in accordance with the invention will be described in further detail below. Alternatively, the 900 billing node may implement a standard 900 billing service in which a caller is billed a fixed amount for calling a particular telephone number. In such an embodiment, various 900 numbers may be used in order to effectively implement a system which can bill customers various amounts.

The audio browsing platform 154 is a system which allows for the interaction between an audio device, such as telephone 114, and an Internet server such as server 140. Thus, audio browsing platform 154 will request and receive documents from vendor server 140 and interpret those documents into audio data suitable for transmission to a customer at telephone 114. Similarly, audio browsing platform 154 interprets audio signals (e.g. speech or DTMF) received from telephone 114 into data signals appropriate for transmission to the vendor server 140 via the Internet 120. The audio browsing platform 154 includes a processor which controls the operation of the audio browsing platform 154 in accordance with stored computer program instructions. Audio browsing platform 154 may advantageously be implemented using the technology described in United States Patent Application Ser. No 08/635801 filed April 22, 1996, entitled Method and Apparatus for Information Retrieval Using Audio Interface, which is incorporated herein by reference.

In accordance with the invention, the validation system 150 communicates with the telephone 114 via the PSTN 130 and the vendor server 140 via the Internet 120. This allows for orders placed by the customer using computer 112 connected to the vendor server 140 via the Internet 120 to be validated via customer telephone 114 connected to the validation system 150 via the PSTN 130. In the embodiment shown in Fig. 1, the validation system 150 comprises a 900 billing node 152 and an audio browing platform 154 in order to implement a validation system that is based on billing. However, the validation system 150 may comprise other components in order to implement a validation system which validates customer transactions on criteria other than billing (e.g. identification, pre-registration, etc.). One skilled in the art could readily implement such alternate validation systems given the description herein.

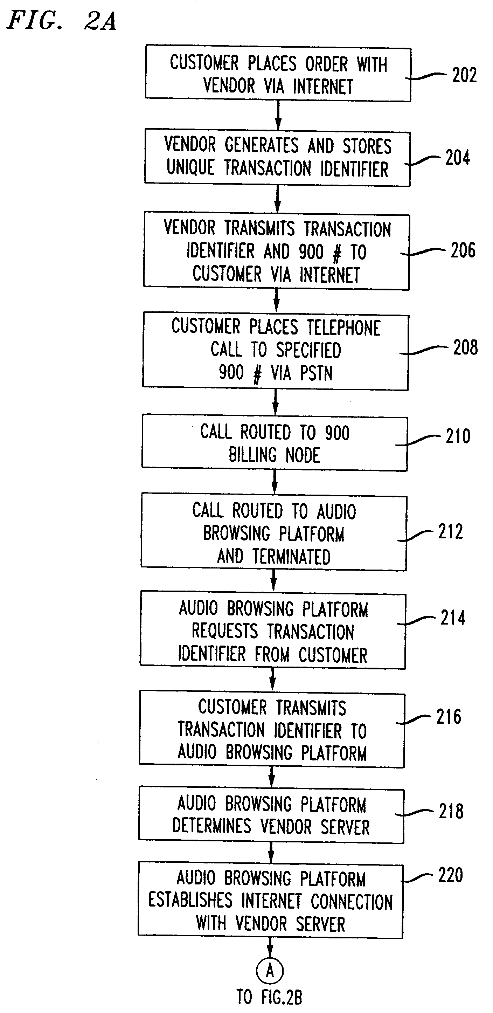

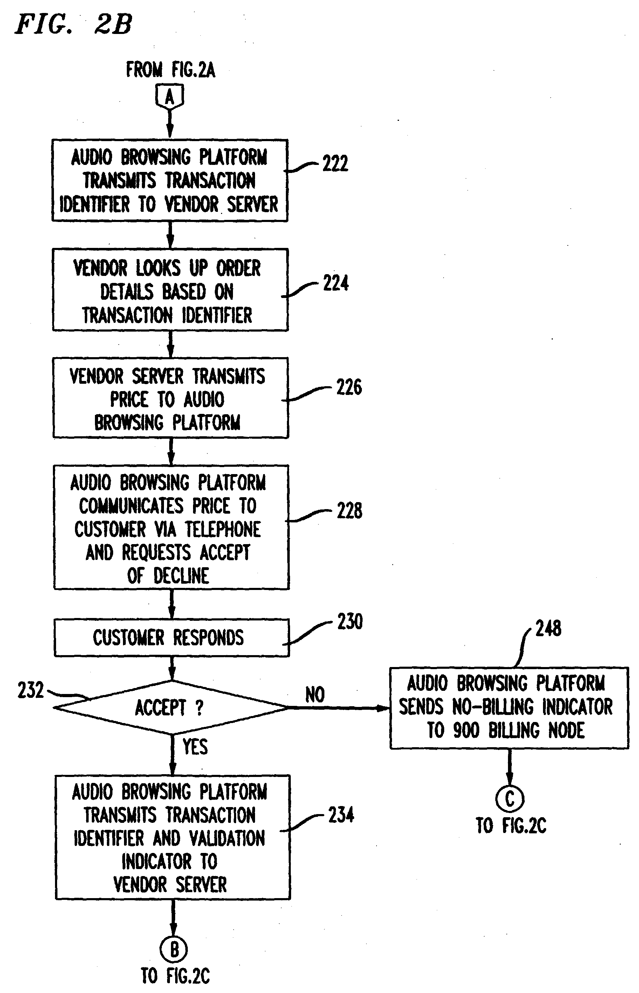

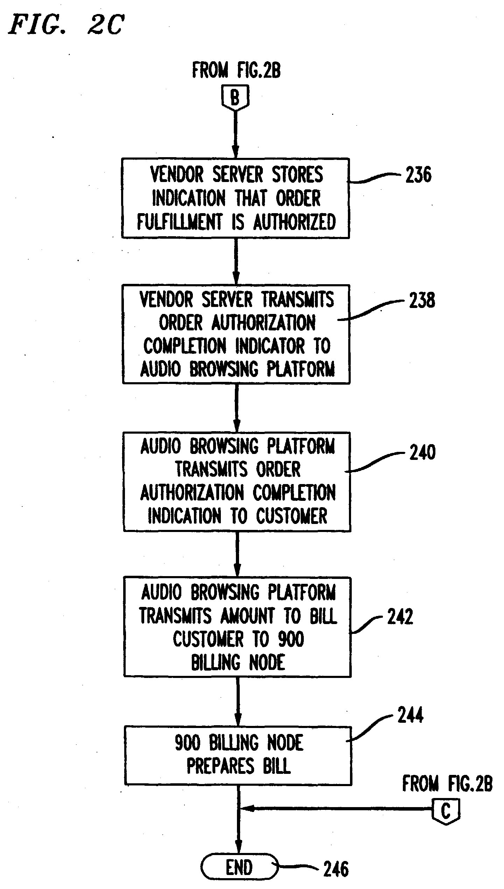

The operation of the elements of Fig. 1 will be further described in conjunction with the flowchart of Figs. 2A-2C which illustrates the steps performed in accordance with one embodiment of the invention. Referring now to Figs. 2A-2C, in step 202 a customer at customer premises 110 using computer 112 places an order with a vendor via an Internet connection to vendor server 146. This type of interaction between a computer user and a vendor server is well known and the details of such interaction will not be described herein. The order may be for various types of goods. For example, the customer could have requested the downloading of soft goods, such a computer program code, video, audio, text, etc. Such soft goods can be transmitted directly to the computer 112 from the vendor server 140 via the Internet 120. Alternatively, the customer could have requested access to content located at the vendor server 140 or elsewhere. For example, the vendor may limit access to certain content at the vendor server 140 to customers who have pre-registered and or paid a fee to access the content. Alternatively, the customer may have ordered hard goods, such as a book, clothing, etc., which must be delivered to the customer through some means other than electronically. In this case, the customer may provide the vendor with additional delivery instruction, such as delivery address.

In step 204 the vendor server 140 generates a unique transaction identifier which will be used to identify this particular transaction. This transaction identifier is stored in the vendor server 140 associated with the details of the particular transaction. Such details may include, for example, the goods requested by the customer as well as the price of the goods. Alternatively, the customer could be requested to choose a transaction identifier and provide the chosen transaction identifier to the vendor server 140. In such an embodiment, the vendor server 140 will check the customer chosen transaction identifier to make sure that it is unique, and if so, the vendor server 140 will store the transaction identifier associated with the details of the particular transaction. In yet another embodiment, the transaction identifier could be the telephone number of telephone 114. In each of these embodiments, a unique transaction identifier is established, known to both the vendor server 140 and the customer, which uniquely identities a particular transaction.

In step 206, the vendor server transmits the transaction identifier to the customer at computer 112 via Internet 120. Further, the vendor server also transmits the telephone number that the user must call in order to validate the transaction. In one advantageous embodiment, the telephone number is such that it will result in a charge to the customer's telephone bill (e.g. a 900 telephone number). The 900 telephone number may be shared by a number of vendors who are utilizing the validation system 150. In such a case, the transaction identifier will be used to identify the particular vendor as well as the particular transaction. This will be explained in further detail below in conjunction with step 218. In an alternate embodiment, the 900 number could be dedicated to a particular vendor such that each vendor has its own dedicated 900 number.

As described above, it is noted that this telephone call need not necessarily result in a monetary charge. For example, the vendor may wish to validate the customer based on some other criteria other than payment. For example, the vendor may only want to validate the customer's identity, which may be accomplished by the customer placing a telephone call to a telephone number which will result in the customer's telephone number being reported to the validation system. It is well known that the PSTN 130 can transmit the telephone number of the calling telephone number. The customer's telephone number may then be used to validate the customer, with no charge being levied against the customer's telephone bill.

In step 208 the customer places a telephone call via telephone 114 to the telephone number provided by the vendor server 140 in step 206 via the PSTN 130. In step 210 the call is routed to the validation system 150, and more particularly to the 900 billing node 152 via PSTN, 130. The 900 billing node 152 also receives the dialed number from the telephone network. The routing of telephone calls in a telephone network and the receipt of the dialed number by a network node is well known in the art and will not be described in detail herein. In step 212 the telephone call, including the dialed number information, is routed from the 900 billing node 152 to the audio browsing platform 154 via PSTN 130. The call is terminated at the audio browsing platform 154.

Upon receipt of the call, the audio browsing platform 154 requests that the customer enter the transaction identifier for the transaction being validated in step 214. This request is sent from the audio browsing platform 154 to the telephone 114 via the PSTN 130 utilizing the telephone call connection that was set up between the telephone 114 and the audio browsing platform 154. The request is in the form of an audio signal (e.g. recorded voice signal). In step 216 the customer transmits the transaction identifier to the audio browsing platform via PSTN 130. The transaction identifier is advantageously transmitted via DTMF tones in response to the customer pressing appropriate keys on the keypad of the telephone 114. Alternatively, the customer may transmit the transaction identifier by speaking into the microphone of telephone 114 with the audio browsing platform 154 utilizing speech recognition to recognize the transaction identifier. In yet another embodiment, if, as described above, the transaction identifier is the telephone number of telephone 114, then such telephone number could be automatically provided to the audio browsing platform 154 by the PSTN 130 in a manner which is well known.

In step 218 the audio browsing platform 154 determines the vendor server associated with the transaction being validated. Assuming that several vendors utilize the same 900 number, the audio browsing platform 154 will ascertain the appropriate vendor server based on the transaction identifier entered by the customer in step 216. For example, the if the transaction identifier is 10 characters, the first 4 characters may identify the vendor of the transaction. Alternatively, if each vendor were assigned its own 900 number, then the audio browsing platform 154 will ascertain the appropriate vendor server based on the dialed number information received from the telephone network as described above in conjunction with steps 210 and 212. In either case, the audio browsing platform performs a table lookup, based on either the transaction identifier or the dialed number, to determine the vendor associated with the transaction being validated. The result of the lookup will be the Internet address which is associated with vendor server 140. In an advantageous WWW embodiment, the address is a uniform resource locator (URL). The use of URL's identify particular Internet servers is well known in the art.

In step 220 the audio browsing platform 154 establishes an Internet connection with the vendor server via the Internet 120. In one advantageous WWW embodiment, the connection is established using the well known hypertext transfer protocol (HTTP). Alternatively, the connection could be made using another Internet protocol, such as Telnet. In step 222 the audio browsing platform 154 transmits the transaction identifier received from the customer in step 216 to the vendor server 140 via the Internet 120 connection established in step 220. In step 224 the vendor server 140 uses the received transaction identifier to retrieve the details (including price) of the particular transaction which were stored in the vendor server 140 as described above in conjunction with step 204. In step 226 the vendor server 140 transmits the price of the transaction to the audio browsing platform 154 via the Internet 120.

In step 228 the audio browsing platform 154 transmits the price information to the customer via the PSTN 130 and telephone 114. This price information is transmitted in the form of voice signals. In step 230 the customer responds to the transmitted price information by either accepting or declining the transaction. The customer may respond using voice commands or using DTMF signals by pressing keys on the telephone 114 keypad. In step 232 the audio browsing platform 154 determines whether the customer accepted the transaction. If the customer does not accept the transaction, then in step 248 the audio browsing sends a no-billing indicator to the 900 billing node 152. The no billing indicator may be any type of indicator which will inform the 900 billing node that no charge is to be made against the customer for this transaction. In one embodiment where the 900 billing node implements a variable amount billing system, the audio browsing platform 154 will send a price of $0.0 to the 900 billing node 152 which will result in the customer not being billed for the transaction. The method ends in step 246.

It is noted that if the method ends after step 248, the validation system 150 has not sent an indication to the vendor server 140 indicating that the transaction has been validated. Thus, if the customer attempted to retrieve the goods from vendor server 140 (for example if the goods were soft goods or content), the vendor server 140 would not provide the goods to the customer because the transaction was never validated by the validation system 150.

If the audio browsing platform 154 determines in step 232 that the customer accepted the transaction, then in step 234 the audio browsing platform 154 transmits the transaction identifier and a validation indicator to the vendor server 140. In step 236 the vendor server 140 stores an indication in its memory that order fulfillment is authorized for the transaction identified by the transaction identifier received in step 234. In step 238 the vendor server 140 transmits an order authorization completion indicator to the audio browsing platform 154 to indicate that fulfillment of this order has been authorized in the vendor server 140. Depending on the type of goods ordered (e.g. soft, hard, access) the vendor server may also transmit additional order fulfillment information to the audio browsing platform 154 in step 238. Such additional order fulfillment information may be, for example, a password which will allow the customer to access the vendor's system. delivery information, or any other pertinent information related to fulfillment of the order. In step 240, the audio browsing platform 154 transmits the order authorization completion indication and any additional order fulfillment information which was received from the vendor server 140 in step 238 to the customer via PSTN, 130 and telephone 114 using audio voice signals.

In step 242 the audio browsing platform 154 transmits the price of the transaction which was received from the vendor server 140 in step 226 to the 900 billing node 152. In step 244, the 900 billing node 152 charges the price of the transaction to the customer's telephone bill. The method ends in step 246.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method for validating an electronic transaction comprising the steps of:
receiving a telephone call at a validation system via a telephone network, said telephone call providing a transaction identifier to said validation system; and
transmitting said transaction identifier from said validation system to a vendor server via a data network.

2. The method of claim 1 wherein said telephone call is placed to a telephone number which results in a charge in addition to the cost of the telephone call.

3. The method of claim 2 wherein said charge is variable.

4. The method of claim 3 further comprising the steps of:
receiving a charge amount at said validation system from said vendor server in response to said step of transmitting said transaction identifier: and
providing said received charge amount to a network billing node.

5. The method of claim 1 wherein said data network is the Internet.

6. The method of claim 1 further comprising the step of: identifying said vendor server based on said transaction identifier.

7. The method of claim 1 further comprising the step of:
identifying said vendor server based on a telephone number dialed to establish said telephone call.

8. The method of claim 1 further comprising the steps of:
receiving a charge amount at said validation system from said vendor server in response to said step of transmitting said transaction identifier:
transmitting said received charge amount to a customer via said telephone call:
receiving an accept/decline indication from said customer in response to transmission of said charge amount.

9. The method of claim 8 further comprising the step of:
providing said received charge amount to a network billing node in response to receipt of an accept indiciation from said customer.

10. The method of claim 8 further comprising the step of:
transmitting a no-billing indicator to a network billing node in response to receipt of a decline indication from said customer.

11. The method of claim 1 wherein said transaction identifier is a telephone number of a calling telephone.

12. A method for validating an electronic transaction comprising the steps of:
receiving a telephone call at a validation system via a telephone network, said telephone call resulting in an additional charge billed to a calling telephone in addition to the cost of the telephone call; and
in response to receipt of said telephone call, transmitting an authorization indication from said validation system to a vendor server via a data network.

13. The method of claim 12 further comprising the step of:
receiving at said validation system the telephone number of the calling telephone; and
wherein said authorization indication comprises said telephone number.

14. The method of claim 12 further comprising the step of: receiving a transaction identifier from said calling telephone; and wherein said authorization indication comprises sand transaction identifier.

15. The method of claim 12 where said additional charge is variable.

16. A method for validating an electronic transaction comprising the steps of:
a) receiving a transaction identifier via a telephone network;
b) transmitting said transaction identifier to a vendor server via a data network;
c) receiving a charge amount via said data network in response to step b);
d) transmitting said charge amount to a billing node.

17. The method of claim 16 further comprising the step of: billing said charge amount to a customer telephone bill.

18. The method of claim 17 wherein said charge amount is variable.
